# EUROPEAN PATENT SPECIFICATION

(11) **EP 0 716 241 B1**
(45) Date of publication and mention of the grant of the patent: **29.03.2000**
(21) Application number: 95308744.2
(22) Date of filing: 04.12.1995
(51) Int. Cl.: F16C 39/06

(54) **Magnetic bearing apparatus**
Magnetlagervorrichtung
Dispositif de palier magnétique

(30) Priority: 05.12.1994 JP 30120794
(43) Date of publication of application: 12.06.1996
(73) Proprietor: SEIKO SEIKI KABUSHIKI KAISHA, Narashino-shi Chiba (JP)
(72) Inventor: Maejima, Yasushi, c/o Seiko Seiki K.K., Narashino-shi, Chiba (JP)
(74) Representative: Sturt, Clifford Mark

(56) References cited:
- EP-A- 0 315 469
- EP-A- 0 620 376
- EP-A- 0 674 112
- US-A- 4 717 315
- PATENT ABSTRACTS OF JAPAN vol. 9 no. 25 (M-355) [1748] ,2 February 1985 & JP-A-59 170526 (YASUKAWA DENKI SEISAKUSHO K.K.) 26 September 1984,

## Description

The present invention relates to a magnetic bearing apparatus, and more particularly, to a magnetic bearing apparatus used in a turbo molecular pump.

Recently, a magnetic bearing that enables a super-high speed rotation, a maintenance-free character and the like has been vigorously developed. The magnetic bearing magnetically floats a rotor to support it in a non-contact manner. The magnetic bearings are classified into ones having permanent magnets and others having electromagnets, called controllable type magnetic bearings.

In the controllable type magnetic bearings, a floating position of the rotor is detected by a shift sensor and an exciting current for the electromagnets is controlled in a feedback manner on the basis of the detected value to thereby perform the positional control of the rotor. The positional control is carried out, for example, in one axis (one direction) in the axial direction and in four axes (four directions) in the radial direction, independently of each other. Shift sensors are provided for the respective axes.

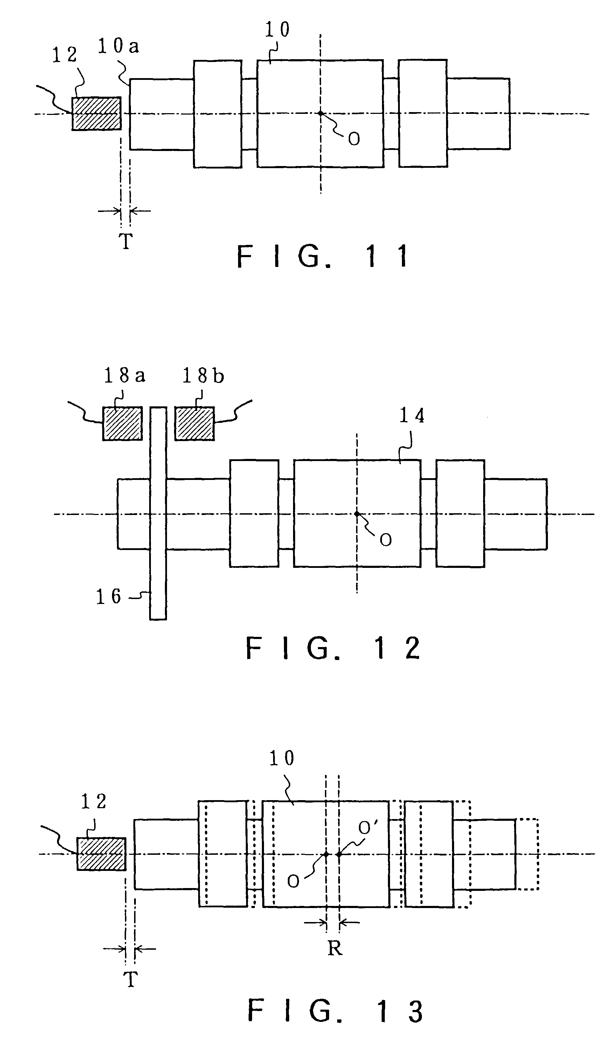

Figs. 11 and 12 show arrangements of the axial sensors for detecting the shift in the axial direction of the rotor.

In the magnetic bearing shown in Fig. 11, an axial sensor 12 is arranged at a position to face an end face 10a of a rotor 10 for detecting a clearance T up to the axial end face 10a. The positional control of the rotor 10 in the axial direction is carried out so that the clearance T is kept constant.

In the magnetic bearing shown in Fig. 12, a disc 16 used as a sensor target is provided in the vicinity of an axial end of a rotor 14, and a pair of axial sensors 18a and 18b are arranged at positions embracing the disc 16. The positional control is carried out so that a clearance between the axial sensor 18a and the disc 16 and a clearance between the axial sensor 18b and the disc 16 are equal to each other.

The magnetic bearings are used in, for example, a rotor or spindle of a turbo molecular pump, and in general, the rotors are made of metal. Accordingly, in some cases, during the operation, the temperature of the rotor is elevated by the heat of the electromagnets and the position of each part of the rotor is changed due to thermal expansion.

Fig. 13 shows the positional change in each part when the rotor 10 is thermally expanded in the magnetic bearing in Fig. 11.

As shown in Fig. 13, when the rotor 10 is thermally expanded, a part that is remoter from the axial sensor is subjected to a greater deviation from the target value of control. That is conventionally, the axial sensor 12 is provided at the axial end portion of the rotor 10, and the positional control of the rotor 10 is carried out on the basis of the axial end portion so that the rotor 10 nominally expands with the left end portion being fixed as shown by dotted lines in Fig. 13 and for example, an intermediate point O shown in Fig. 11 is deviated to the point O' by a distance R.

By the way, in general, the intermediate portion of the rotor is a rotor (for motor) in case of a motor, or carries rotary blades in case of turbo molecular pump or a compressor. Accordingly, the positional displacement in this portion would adversely affect the drive of a rotary system.

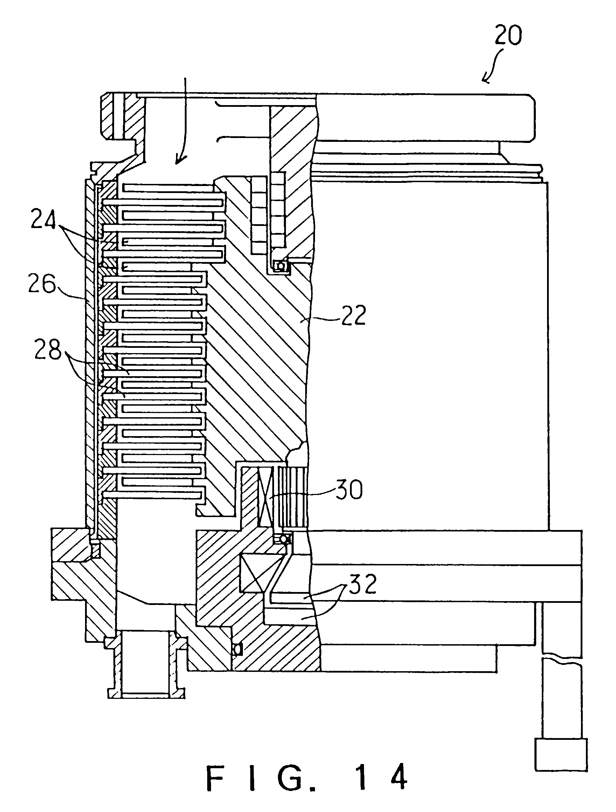

Fig. 14 shows a magnetic bearing type turbo molecular pump.

In the turbo molecular pump 20 shown in Fig. 14, a plurality of rotor blades 24 are mounted on the intermediate portion of the rotor 22 so that the rotor blades 24 are inserted into a plurality of stator blades 28 fixed to a casing 26. Then, the rotor blades 24 are rotated together with the rotor 22 by the drive force of the motor 30 so that air suction or intake is carried out as indicated by an arrow in Fig. 14.

In the turbo molecular pump 20 shown in Fig. 14, permanent magnets 32 are used as the axial magnetic bearing. However, in the case where the controllable type magnetic bearing in which the axial sensor is disposed at the axial end as shown in Fig. 11 is used instead, a large positional displacement is generated due to the thermal expansion in the intermediate portion of the rotor 22. If such a positional displacement of the rotor 22 is generated, in some cases, the rotor blades 24 which are rotating would be brought into contact with the stator blades 28. For this reason, it is conventionally necessary to keep a large clearance in consideration of the displacement.

EP 0315469A discloses a machining apparatus comprising a rotating spindle supported by electromagnets and an axial sensor at one end of the spindle.

Thus, there is a fear that the positional displacement due to the thermal expansion in the part acting the important function for the drive system such as the intermediate portion of the rotor would adversely affect the drive of the rotary system. Accordingly, the magnetic bearing suffers from a serious task, to be solved, that the positional displacement due to the thermal expansion should be suppressed in such a portion.

In contrast to this task, it is proposed to dispose the axial sensor directly at the position to be controlled (for example, point O). However, as mentioned above, in case of the turbo molecular pump, since the rotor blades or the like are mounted on the intermediate portion of the rotor, it is very difficult to dispose the sensor at such a position.

Accordingly, it is an object of the present invention to provide a magnetic bearing apparatus for controlling a predetermined position of a rotor selected in an arbitrary manner as a point to be controlled even upon a thermal expansion.

In order to attain this and other objects, according to the present invention, there is provided a magnetic bearing apparatus for controlling a rotor to a target position on the basis of detected values of positional sensors for detecting a floating position of the rotor, comprising:
axial electromagnets for magnetically floating the rotor in an axial direction thereof, and further comprising;
two axial sensors for detecting axial displacements at two positions symmetric about a point, relative to a predetermined point of the rotor selected as a target point to be controlled, respectively; the two axial sensors are spaced apart from each other in a direction of an axis of rotation of the rotor; and
a rotor position controlling means for holding the floating position of the rotor so that respective output values of said two axial sensors have a predetermined relationship to each other.

Preferably, the predetermined relationship is that the respective output values of the two axial sensors are equal to each other.

Furthermore, in order to attain this and other objects, according to the present invention, said axial sensors use as targets two discs provided, respectively, at equidistant positions in the axial direction to the two points which are symmetrical about the predetermined point.

Furthermore, in order to attain this and other objects, according to the present invention, the predetermined point is a centre in the axial direction of the rotor, and said axial sensors use as targets both side end faces of the rotor.

In order to attain this and other objects, according to the present invention, there is provided a magnetic bearing apparatus for controlling a rotor to a target position on the basis of detected values of positional sensors for detecting a floating position of the rotor, comprising:
axial electromagnets for magnetically floating the rotor in an axial direction thereof, and further comprising;
two axial sensors for detecting axial displacements at first and second positions on the rotor, respectively; the two axial sensors are spaced apart from each other in a direction of an axis of rotation of the rotor;
compensation means for compensating detection values of said axial sensors in response to axial distances from a predetermined point of the rotor, selected as a control target, to the detection position of the axial sensors;
and a rotor position controlling means for holding the floating position of the rotor at a position where the compensated detection values have a predetermined relationship to each other.

Preferably, the compensation means comprises two compensation circuits for compensating detection values of respective axial sensors.

In the magnetic bearing apparatus according to the present invention, the rotor is magnetically floated in the axial direction by the axial electromagnets. The two axial sensors detect, respectively, the axial shifts at the two points that are preferably symmetrical relative to the predetermined point of the rotor selected as the control target. The rotor position control means holds the floating position of the rotor at the position so that the respective values in the two axial sensors have a predetermined relationship. Preferably, where the two points are symmetric, the values are equal to each other.

Further, the respective shifts of the discs are detected by the axial sensors so that the rotor positional control is carried out by the detection values.

Furthermore, the rotor positional control is carried out on the basis of the detection values by detecting the shifts at both side end faces of the rotor with the axial sensors.

Otherwise, the rotor is magnetically floated in the axial direction by the axial sensors. The two axial sensors detect the axial shift at one and the other ends of the rotor. The detection values of the respective sensors are compensated for in correspondence with the distance in the axial direction from the predetermined position of the rotor selected as the target point to the detection positions of the respective sensors by the respective compensation circuits. The rotor position control means holds the floating position of the rotor at the position where the output values of the compensation circuits have a predetermined relationship. Preferably, the output values are equal to each other.

Embodiments of the invention will now be described by way of example only with reference to the accompanying diagrammatic figures, in which;
Fig. 1 is a schematic view showing a part of a structure of a magnetic bearing apparatus according to a first embodiment of the invention;
Fig. 2 is an illustration of a circuit structure of axial sensors according to the first embodiment of the invention;
Fig. 3 is a block diagram showing a part of a control system of the magnetic bearing apparatus in accordance with the first embodiment of the invention;
Fig. 4 is an illustration of a positional change of each part, when the rotor is thermally expanded, in the magnetic bearing apparatus according to the first embodiment of the invention;
Fig. 5 is a schematic view showing a part of a structure of a magnetic bearing apparatus according to a second embodiment of the invention;
Fig. 6 is a schematic view showing a part of a structure of a modified example of the magnetic bearing apparatus according to the second embodiment of the invention;
Fig. 7 is a schematic view showing a part of a structure of another modified example of the magnetic bearing apparatus according to the second embodiment of the invention;
Fig. 8 is an illustration of another example of a sensor target;
Fig. 9 is an illustration of a positional relationship of axial sensors which are located at different distances from a point O;
Fig. 10 is a block diagram showing another example of sensor circuits of the axial sensors;
Fig. 11 is a schematic view showing a part of a structure of a conventional magnetic bearing apparatus;
Fig. 12 is a schematic view showing a part of another structure of a conventional magnetic bearing apparatus;
Fig. 13 is an illustration showing a change upon the thermal expansion of the rotor in the convention magnetic bearing apparatus; and
Fig. 14 is a partially fragmentarily cross-sectional view showing an internal structure of a turbo molecular pump.

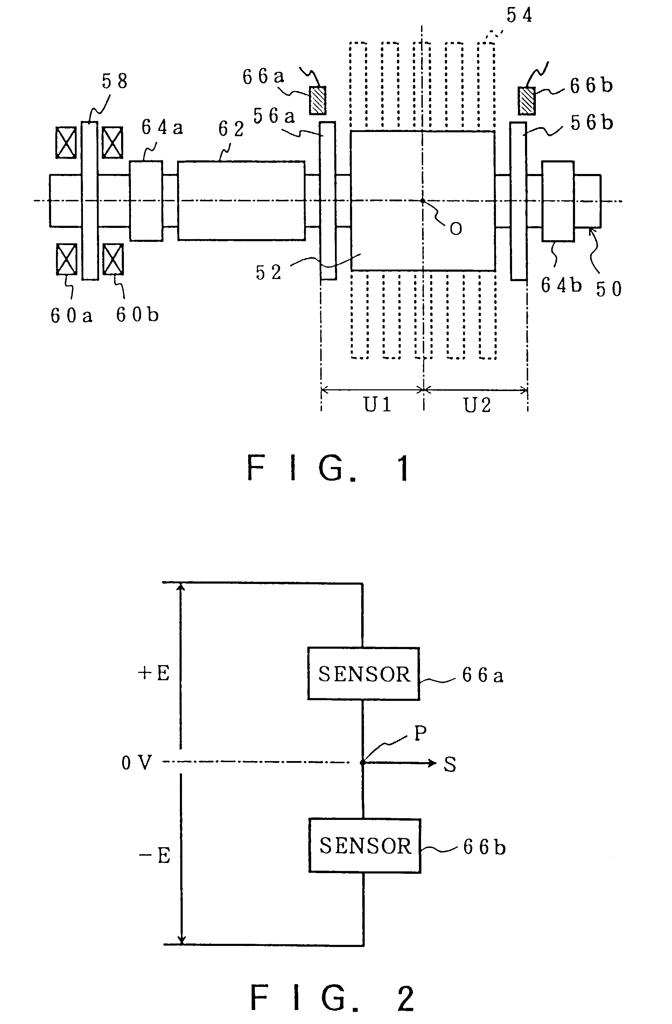

The present invention will now be described by way of example in detail based upon embodiments of a magnetic bearing apparatus according to the present invention with reference to Figs. 1 to 10.

Fig. 1 shows a part of a magnetic bearing apparatus according to a first embodiment.

The magnetic bearing apparatus according to this embodiment is used to rotatably support a rotor 50 of a turbo molecular pump. As shown in outline by dotted lines in Fig. 1, a plurality of rotor blades 54 (see Fig. 14) are mounted on a pump portion 52 of the rotor 50.

Sensor discs 56a and 56b, which are targets for sensors 66a and 66b, made of magnetic material are mounted on both sides of the pump portion 52. The positions where these sensor discs 56a and 56b are mounted are equidistant from a centre point O of the pump portion 52. Namely, an axial distance U1 from the point O to the sensor disc 56a is equal to an axial distance U2 from the point O to the sensor disc 56b (U1=U2).

A thrust bearing disc 58 made of metal is mounted in the vicinity of a left axial end of the rotor 50. Axial electromagnets 60a and 60b are arranged to face each other so as to embrace the thrust bearing disc 58 in the axial direction.

In this embodiment, a magnetic force (attractive force) of the axial electromagnets 60a and 60b is applied to the thrust bearing disc 58 so that the rotor 50 is kept in the axial direction in a magnetically floating condition.

A motor portion 62 is provided between the thrust bearing disc 58 and the sensor disc 56a. The motor portion 62 functions as a rotor of the motor. A rotational torque is generated by motor coils (not shown) disposed around the motor portion 62.

Radial bearing portions 64a and 64b are provided between the motor portion 62 and the thrust bearing disc 58, and at a right end side (in Fig. 1) of the sensor disc 56b. The radial bearing portions 64a and 64b are provided by shrink-fitting with ferromagnetic material. Radial electromagnets (not shown) are disposed around the radial bearing portions 64a and 64b, respectively, for magnetically floating the rotor 50 in a radial direction. Namely, the rotor 50 is rotatably supported in the radial direction by the radial bearing portions 64a and 64b.

Also, although not shown in Fig. 1, radial sensors for detecting radial shifts of the rotor 50 are disposed around the rotor 50, so that a feedback control of the magnetic current in the radial electromagnets (not shown) may be carried out in response to outputs of the radial sensors. Incidentally, in this embodiment, the four-axis radial magnetic bearing is constituted by the radial sensors (not shown), the radial electromagnets (not shown) and the like.

On the other hand, axial sensors 66a and 66b for detecting the axial shift of the rotor 50 are disposed around the sensor discs 56a and 56b respectively. The axial sensors 66a and 66b are mounted equidistantly in the axial direction from the point 0. The positions of the axial 66a and 66b are somewhat displaced from the sensor discs 56a and 56b. Based upon the displacement, the axial sensors 66a and 66b may detect the shifts with reference to outer end faces of the sensor discs 56a and 56b.

Also, in this embodiment, inductance conversion type shift sensors are used as the axial sensors 66a and 66b. The inductance conversion type shift sensors are used to convert an inductance change into a shift signal when the sensor discs 56a and 56b made of magnetic material are shifted.

Fig. 2 schematically shows a circuit structure for the axial sensors 66a and 66b.

As shown in Fig. 2, the axial sensor 66a and the axial sensor 66b are connected in series with each other and are subjected to the application of high frequency voltage. The sensor outputs corresponding to the shifts of the sensor discs 56a and 56b may be picked up from the middle point P between the axial sensor 66a and the axial sensor 66b.

In this embodiment, the axial sensors 66a and 66b do not measure absolute positions of the sensor discs 56a and 56b but output signals corresponding to a difference between the distance from the axial sensor 66a to the sensor disc 56a and the distance from the axial sensor 66b to the sensor disc 56b. For instance as shown in Fig. 1, when the interval between the axial sensors 66a and 66b and the respective sensor discs 56a and 56b are the same (i.e. U1=U2), the inductances of the axial sensors 66a and 66b are the same. Accordingly, the voltage at the middle point P becomes 0V. When the positions of the sensor discs 56a and 56b are displaced, a sensor output S corresponding to the difference of the direction and the magnitude of the displacement may be obtained from the middle point P.

In this embodiment, the feedback control of the exciting currents of the axial electromagnets 60a and 60b in correspondence with the outputs of the axial sensors 66a and 66b is carried out to thereby attain the axial positional control of the rotor 50.

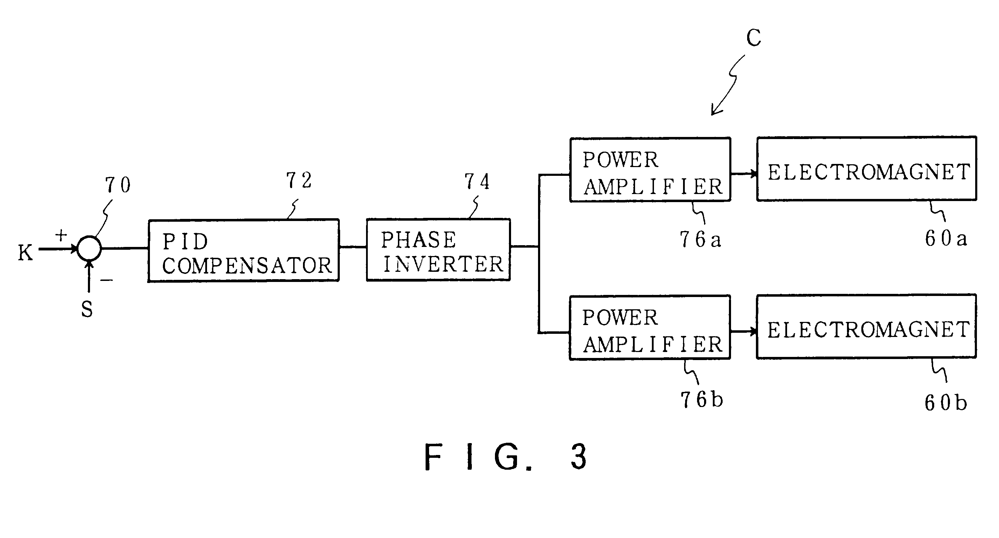

Fig. 3 shows a control circuit C provided in the magnetic bearing apparatus for carrying out the positional control of the rotor 50 in the axial direction.

As shown in Fig. 3, the control circuit C includes an adder 70 for subtracting the sensor outputs S of the axial sensors 66a and 66b from a reference signal K for commanding a floating position of the rotor 50 in the axial direction, a PID compensator 72 for processing signals of proportional operation, integration operation, differentiating operation and the like to signals processed in the adder 70, a phase inverter 74 for inverting a phase of the signal from the PID compensator 72, and power amplifiers 76a and 76b for amplifying exciting currents of the axial electromagnets 60a and 60b in response to the output signal of the phase inverter 74, respectively.

In this embodiment, the feedback control relative to the exciting currents of the axial electromagnets 60a and 60b in response to the sensor outputs S from the axial sensors 66a and 66b is carried out by the thus constructed control circuit C.

A control circuit is provided for radial magnets (not shown) for every axis.

The operation of the embodiment with such an arrangement will now be described.

First of all, the rotor 50 is magnetically floated in the radial direction by the radial electromagnets not shown, and the same time, is magnetically floated in the axial direction by the axial electromagnets 60a and 60b. In this case, the exciting current for each electromagnet is controlled by the control circuit (see Fig. 3). The rotor 50 is floated and held in a predetermined position. Namely, the rotor 50 is floated and held in a position shown in Fig. 1 relative to the axial sensors 66a and 66b.

Under this condition, when the temperature of the rotor 50 is elevated by the heat generation of the motor, the electromagnets or the like, the positions of the sensor discs 56a and 56b are changed from the positions shown in Fig. 1 due to the thermal expansion.

The respective shifts of the sensor discs 56a and 56b at this time are fed to the control circuit C (see Fig. 3) as the sensor outputs S which represents the difference therebetween.

The control circuit C controls the magnetic forces of the axial electromagnets 60a and 60b so that the sensor outputs S becomes zero, i.e., the respective shifts of the sensor discs 56a and 56b relative to the axial sensors 66a and 66b are equal to each other.

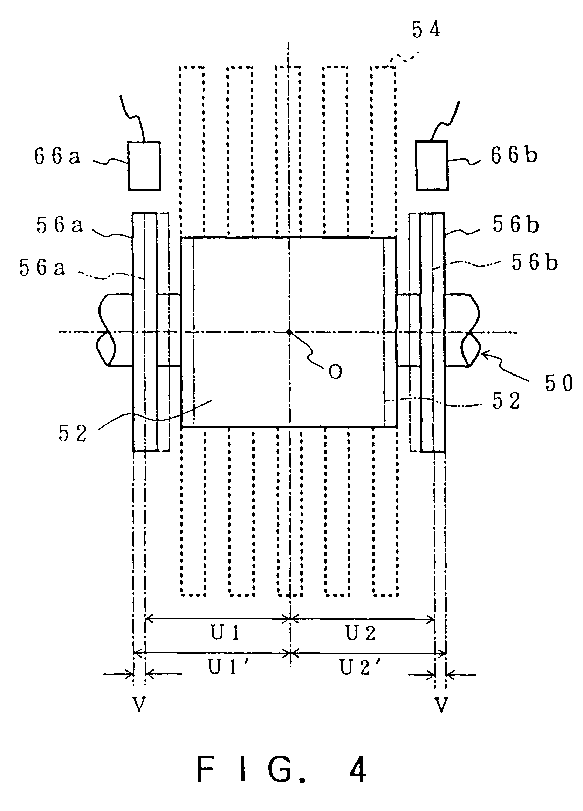

Fig. 4 shows a position which is taken by the sensor discs 56a and 56b (i.e., rotor 50) relative to the axial sensors 66a and 66b in accordance with this positional control.

As shown in Fig. 4, in accordance with the positional control of the control circuit C, the rotor 50 is floated and held in a position that the interval between the sensor disc 56a and the axial sensor 66a and the interval between the sensor disc 56b and the axial sensor 66b are the same.

Accordingly, each part of the rotor 50 is nominally expanded on both sides from a centre of point O by the thermal expansion. Namely, assuming the point O as a fixed point, the sensor discs 56a and 56b on both sides take the positions shifted by a distance V in opposite directions from the positions indicated by the dot and dash lines in Fig. 4, and the distances U1 and U2 from the point O become U1' and U2', respectively. However in this case, the relationship of U1'=U2' is established.

As described above, in the embodiment, since the sensor discs 56a and 56b used as the sensor targets are mounted at the equal distance (U1=U2) from the sensor reference point O, it is possible to carry out the positional control on the basis of the point 0 which could not be directly measured by the sensors. Namely, it is possible to carry out the positional control so that the point O is kept at a constant position even if there is a thermal expansion.

Also, since the respective parts of the rotor 50 are shifted from the centre of the point O upon the thermal expansion, even at the end portion which is remotest from the point O in the pump portion 52, it is possible to suppress the positional displacement to be no more than half of that of the conventional magnetic bearing apparatus where the positional control is carried out on the basis of the end of the shaft. Accordingly, since the positional displacement of the rotor blades 54 is also suppressed, it is possible to set an interval relative to the stator blade (not shown) at a shorter distance than that in the conventional apparatus.

Subsequently, a second embodiment will be explained. Incidentally, the same reference numerals are used to indicate the like components of the two embodiments. The duplication of explanation therefor will be omitted.

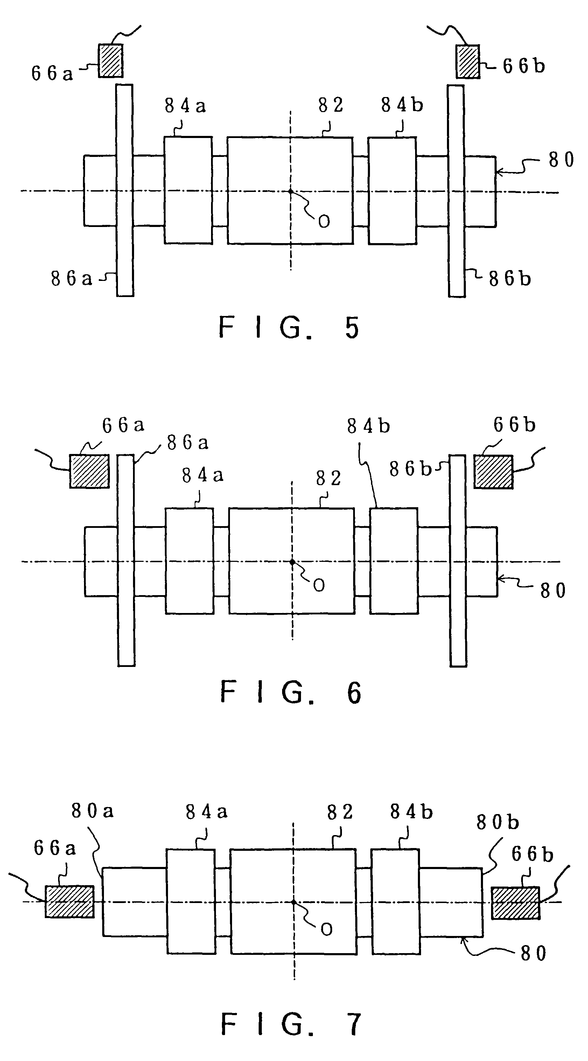

Fig. 5 shows the sensor position of the magnetic bearing apparatus in accordance with the second embodiment. The magnetic bearing apparatus is used for supporting a rotor 80 in the spindle. A motor portion 82 is provided as a rotor of the motor at the intermediate portion of the rotor 80. A rotational torque is generated by a rotary magnetic field caused by a motor winding (not shown) arranged around the motor portion 82. Radial bearing portions 84a and 84b supported in the radial direction by radial electromagnets (not shown) are provided on both sides of the motor portion 82.

In this embodiment, the centre 0 of the motor portion 82 is to be controlled by the positional control. Sensor discs 86a and 86b used as the sensor targets are mounted at the positions equidistant from the point O. Axial sensors 66a and 66b are mounted around the sensor discs 86a and 86b for detecting the displacements of the rotor 80 in the axial direction.

The axial sensors 66a and 66b are somewhat displaced from the respective sensor discs 86a and 86b in the same way as in the first embodiment. The outer or inner end faces of the sensor discs 86a and 86b may be used as the references of the displacement measurement.

Incidentally, although not shown in Fig. 5, components corresponding to the axial electromagnets 60a and 60b and the thrust bearing disc 58 of the first embodiment are also provided in the arrangement. In the same way, the positional control in the axial direction of the rotor 80 is carried out in response to the sensor outputs S of the axial sensors 66a and 66b by the circuit corresponding to the control circuit C shown in Fig. 3.

In this embodiment, since the sensor discs 86a and 86b are equidistantly mounted from the point O of the motor portion 82, even if the thermal expansion occurs, the positional control of the rotor 80 may be carried out so that the point O is always kept constant. Accordingly, since the displacement of the motor portion 82 relative to the motor winding (not shown) is reduced, it is possible to reduce the loss due to the positional displacement.

Incidentally, the axial sensors 66a and 66b may be provided at any other suitable positions.

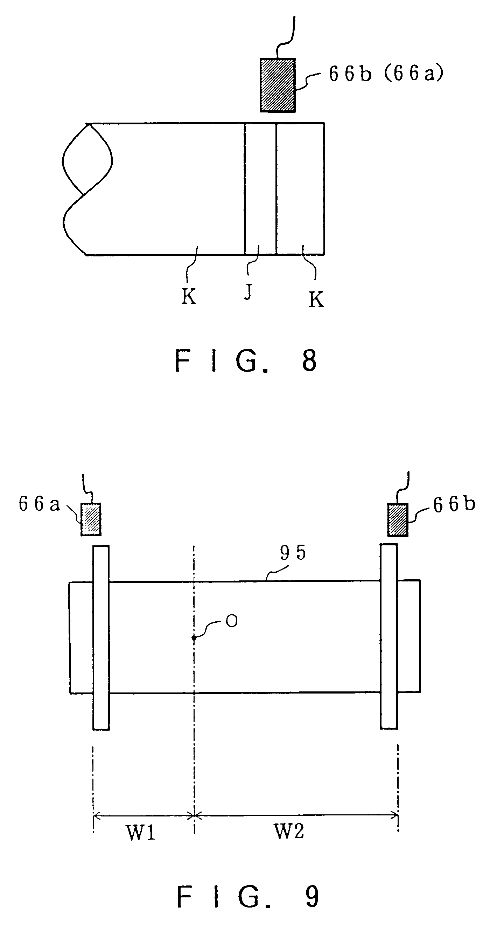

Figs. 6 and 7 show examples of the other locations of the axial sensors 66a and 66b.

In the example shown in Fig. 6, the axial sensors 66a and 66b are provided at the positions to face the outer end faces of the sensor discs 86a and 86b, respectively, to detect the shifts of the end faces.

Also, in the example shown in Fig. 7, the axial sensors 66a and 66b are provided at the positions to face the axial end faces 80a and 80b of the rotor 80, so that the positional control of the rotor 80 may be carried out based upon the shifts of the axial end faces 80a and 80b.

In this example, also, the respective axial end faces 80a and 80b to be used as sensor targets are equidistantly positioned from the point O. Accordingly, even if the thermal expansion occurs, the positional control of the rotor 80 may be carried out so that the point O is always kept constant.

Incidentally, in the foregoing embodiments, although the radial magnetic bearings are of control type using the electromagnets, it is possible to use radial magnetic bearings using permanent magnets.

Also, in addition to the inductance conversion type shift sensors, electrostatic capacitance type shift sensors or optical type sensors may be used as the axial sensors 66a and 66b. Also, it is possible to use these different type sensors in combination.

Furthermore, the axial sensors 66a and 66b may be positioned so that one of them uses the axial end face of the rotor as sensor target as shown in Fig. 7 and the other uses the sensor disc mounted on the rotor as sensor target as shown in Figs. 5 and 6. In this case, if the mount positions of the other axial sensor and the sensor disc are close to the side of one of the axial sensor and the intermediate position of the sensors are close to the vicinity of axial end of the rotor, it is possible to cause the point O, to be kept at a stationary point, to approach the axial end of the rotor.

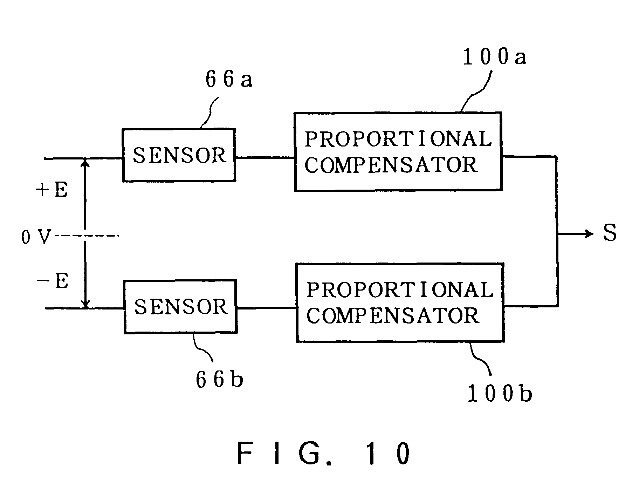

Also, without providing the sensor discs 56a and 56b or the like, a part which is made of magnetic material and a part which is made of non-magnetic material may be provided on the surface of the rotor so that the shift of the rotor in the axial direction may be detected. Namely, as shown in Fig. 8, a sensor target J made of magnetic material and parts K which are made of non-magnetic material are provided on the surface of the rotor so that the axial sensor 66b (likewise 66a) may detect the shift of the rotor on the basis of the boundary between the magnetic sensor target J and the non-magnetic part K.

Also, in the foregoing embodiments, although the axial sensors 66a and 66b are equidistantly arranged from the point O to be controlled, in the case where it is impossible to arrange the axial sensors in the equidistant relationship from the point O, the axial sensors are arranged at different distances from the point O and the output values of the respective sensors are compensated in correspondence with the distances from the point O, whereby it is possible to carry out the positional control to keep the position of the point O constant.

Fig. 9 shows a positional relationship between the axial sensors 66a and 66b and the point O in the case where the axial sensors 66a and 66b are located at different distances from the point O. Fig. 10 shows a sensor circuit for positional control therefor while keeping the point O as the stationary point.

In the example shown in Fig. 9, the distance W1 in the axial direction between the point O and the axial sensor 66a is shorter than the distance W2 in the axial direction between the point O and the axial sensor 66b. For example, the distance W1 and the distance W2 are kept under the relation of 1 to 2.

In this case, if the positional control of the rotor 95 is effected in the same way as in the first embodiment and the second embodiment, the point O which is not the middle point is displaced from a target position upon the thermal expansion. For this reason, in the sensor circuit shown in Fig. 10, proportional compensators (proportional compensation circuits) 100a and 100b for effecting the compensation process in response to the distances W1 and W2 from the point O are connected to the output sides of the axial sensors 66a and 66b.

In this circuit, if the relationship, W1:W2 = 1:2, is established as mentioned above, the proportional compensator 100b effects, such a process that the output value of the axial sensor 66b is made half. The compensated signal is fed as the sensor output S to the control circuit C shown in Fig. 3, thereby attaining the positional control of the rotor 95 while keeping the point O as the stationary point even upon the thermal expansion.

Although in this embodiment the proportional compensator 100a does not alter the output value of the axial sensor 66a, the provision of two axial sensors is preferred to increase the flexibility of the system.

With the magnetic bearing apparatus according to the present invention, it is possible to attain the positional control so that the predetermined point to be controlled is kept constant even upon the thermal expansion of the rotor.

In the embodiments described above, the position of a point is controlled by adjusting the position so that the output (or compensated output) of the position sensors is equal or equal after addition of a position controlling constant. Instead of compensating the outputs of the position sensors when the sensors are asymmetrically arranged a predetermined relationship between the outputs of the sensors, such as the output signal of sensor 66b being twice that of sensor 66a in the example shown in Fig. 9, could be used instead.

Various details of the invention may be changed without departing from its spirit or its scope. Furthermore, the foregoing description of the embodiments according to the present invention is provided for the purpose of illustration only, and not for the purpose of limiting the invention as defined by the appended claims and their equivalents.

The aforegoing description has been given by way of example only and it will be appreciated by a person skilled in the art that modifications can be made without departing from the scope of the present invention.

## Claims

1. A magnetic bearing apparatus for controlling a rotor (50) to a target position on the basis of detected values of positional sensors for detecting a floating position of the rotor, comprising:
axial electromagnets (60a, 60b) for magnetically floating the rotor in an axial direction thereof,
two axial sensors (66a, 66b) for detecting axial displacements at two positions symmetric about a point, relative to a predetermined point (O) of the rotor selected as a target point to be controlled, respectively, a rotor position controlling means for holding the floating position of the rotor so that respective output values of said two axial sensors have a predetermined relationship to each other,
and characterised in that said two axial sensors are spaced apart from each other in a direction of an axis of rotation of the rotor.

2. An apparatus as claimed in claim 1, wherein the predetermined relationship is that the respective output values of said two axial sensors are equal to each other.

3. An apparatus as claimed in claim 1 or claim 2, wherein said axial sensors use as targets two discs (56a, 56b) provided, respectively, at equidistant positions in the axial direction to the two points which are symmetrical about the predetermined point.

4. A magnetic bearing apparatus for controlling a rotor (50) to a target position on the basis of detected values of positional sensors for detecting a floating position of the rotor, comprising:
axial electromagnets (60a, 60b) for magnetically floating the rotor in an axial direction thereof;
two axial sensors (66a, 66b) for detecting axial displacements at first and second positions on the rotor, respectively ;
- a rotor position controlling means for holding the floating position of the rotor at a position where the compensated detection values have a predetermined relationship to each other
and characterised in that said two axial sensors are spaced apart from each other in a direction of an axis of rotation of the rotor and in that comprising
compensation means for compensating detection values of said axial sensors in response to axial distances from a predetermined point (O) of the rotor, selected as a control target, to the detection position of the axial sensors.

5. An apparatus as claimed in claim 4, wherein the compensation means comprises two compensation circuits (100a, 100b) for compensating detection values of respective axial sensors.

6. An apparatus as claimed in claim 5, wherein the output values of the two compensation circuits have a predetermined relationship to each other.

7. An apparatus as claimed in any one of claims 4 to 6, wherein the predetermined relationship is that the values are equal.

8. An apparatus as claimed in any one of claims 4 to 7, wherein said axial sensors use as targets two discs (56a, 56b).

9. An apparatus as claimed in any one of claims 1, 2 or 4 to 7, wherein the predetermined point is a centre in the axial direction of the rotor, and said axial sensors use as targets both side end faces of the rotor.

## Patentansprüche

1. Magnetlagervorrichtung zum Steuern/Regeln eines Rotors (50) zu einer Sollposition auf der Basis erfasster Werte von Positionssensoren zum Erfassen einer Schwebeposition des Rotors, umfassend:
Axialelektromagnete (60a, 60b), um den Rotor in einer axialen Richtung davon magnetisch in der Schwebe zu halten,
zwei Axialsensoren (66a, 66b) zum jeweiligen Erfassen axialer Verlagerungen an zwei um einen Punkt symmetrischen Positionen, relativ zu einem als einem zu steuernden/regelnden Zielpunkt ausgewählten, vorbestimmten Punkt (O) des Rotors,
ein Rotorpositionssteuer/regelmittel zum Halten der Schwebeposition des Rotors derart, dass jeweilige Ausgabewerte der beiden Axialsensoren eine vorbestimmte Beziehung zueinander aufweisen,
dadurch gekennzeichnet, dass die beiden Axialsensoren in einer Richtung einer Drehachse des Rotors mit Abstand voneinander angeordnet sind.

2. Vorrichtung nach Anspruch 1, wobei die vorbestimmte Beziehung derart ist, dass die jeweiligen Ausgabewerte der beiden Axialsensoren einander gleich sind.

3. Vorrichtung nach Anspruch 1 oder 2, wobei die Axialsensoren als Ziele zwei Scheiben (56a, 56b) verwenden, welche jeweils in der axialen Richtung an zu den beiden Punkten äquidistanten Positionen vorgesehen sind, welche beiden Punkte symmetrisch um den vorbestimmten Punkt liegen,

4. Magnetlagervorrichtung zum Steuern/Regeln eines Rotors (50) zu einer Sollposition auf der Basis erfasster Werte von Positionssensoren zum Erfassen einer Schwebeposition des Rotors, umfassend:
Axialelektromangete (60a, 60b), um den Rotor in einer axialen Richtung davon magnetisch in der Schwebe zu halten,
zwei Axialsensoren (66a, 66b) zum jeweiligen Erfassen axialer Verlagerungen an einer ersten und einer zweiten Position am Rotor,
ein Rotorpositionssteuer/regelmittel zum Halten der Schwebeposition des Rotors an einer Position, an welcher die kompensierten Erfassungswerte eine vorbestimmte Beziehung zueinander aufweisen,
dadurch gekennzeichnet, dass die beiden Axialsensoren in einer Richtung einer Drehachse des Rotors mit einem Abstand voneinander angeordnet sind und dass die Magnetlagervorrichtung Kompensationsmittel zum Kompensieren von Erfassungswerten der Axialsensoren in Antwort auf axiale Abstände von einem vorbestimmten, als ein Steuer/Regelziel ausgewählten Punkt (0) des Rotors zur Erfassungsposition der Axialsensoren umfasst.

5. Vorrichtung nach Anspruch 4, wobei die Kompensationsmittel zwei Kompensationsschaltkreise (100a, 100b) zum Kompensieren von Erfassungswerten von jeweiligen Axialsensoren umfassen.

6. Vorrichtung nach Anspruch 5, wobei die Ausgabewerte der beiden Kompensationsschaltkreise eine vorbestimmte Beziehung zueinander aufweisen.

7. Vorrichtung nach einem der Ansprüche 4 bis 6, wobei die vorbestimmte Beziehung derart ist, dass die Werte gleich sind.

8. Vorrichtung nach einem der Ansprüche 4 bis 7, wobei die Axialsensoren als Ziele zwei Scheiben (56a, 56b) verwenden.

9. Vorrichtung nach einem der Ansprüche 1, 2 oder 4 bis 7, wobei der vorbestimmte Punkt ein Zentrum in der axialen Richtung des Rotors ist und die Axialsensoren als Ziele beide Seitenendflächen des Rotors verwenden.

## Revendications

1. Dispositif de palier magnétique destiné à amener un rotor (50) vers une position de destination en fonction de valeurs détectées par des capteurs de position détectant une position flottante du rotor, comprenant :
des électro-aimants axiaux (60a, 60b) provoquant une lévitation magnétique du rotor dans un sens axial,
deux capteurs axiaux (66a, 66b) détectant le déplacement axial, dans deux positions symétriques de part et d'autre d'un point, par rapport à un point prédéterminé (O) du rotor sélectionné comme étant la position de destination à contrôler, respectivement,
un moyen de contrôle de la position du rotor maintenant la position flottante du rotor de telle sorte que les valeurs de sortie respectives desdits deux capteurs axiaux aient une relation prédéterminée l'une avec l'autre,
caractérisé en ce que lesdits deux capteurs axiaux sont espacés l'un de l'autre dans le sens de l'axe de rotation du rotor.

2. Dispositif selon la revendication 1, caractérisé en ce que la relation prédéterminée est telle que les valeurs de sortie respectives des deux capteurs axiaux sont égales.

3. Dispositif selon la revendication 1 ou 2, caractérisé en ce que lesdits capteurs axiaux utilisent comme cibles deux disques (56a, 56b) prévus respectivement dans des positions équidistantes dans le sens axial par rapport aux deux points qui sont symétriques par rapport au point prédéterminé.

4. Dispositif de palier magnétique destiné à amener un rotor (50) vers une position de destination en fonction de valeurs détectées par des capteurs de position détectant une position flottante du rotor, comprenant :
des électro-aimants axiaux (60a, 60b) provoquant une lévitation magnétique du rotor dans un sens axial,
deux capteurs axiaux (66a, 66b) détectant le déplacement axial dans la première position du rotor et la seconde, respectivement,
un moyen de contrôle de la position du rotor pour maintenir la position flottante du rotor dans une position où les valeurs de détection compensées ont une relation prédéterminée l'une avec l'autre,
caractérisé en ce que lesdits deux capteurs axiaux sont espacés l'un de l'autre dans le sens de l'axe de rotation du rotor,
et en ce qu'il comporte des moyens de compensation pour compenser des valeurs de détection desdits capteurs axiaux en réponse aux distances axiales entre un point prédéterminé (O) du rotor sélectionné comme destination du contrôle et la position détectée par les capteurs axiaux.

5. Dispositif selon la revendication 4, caractérisé en ce que les moyens de compensation comprennent deux circuits de compensation (100a, 100b) destinés à compenser les valeurs de détection des capteurs axiaux respectifs.

6. Dispositif selon la revendication 5, caractérisé en ce que les valeurs de sortie des deux circuits de compensation ont une relation prédéterminée l'une par rapport à l'autre.

7. Dispositif selon l'une quelconque des revendications 4 à 6, caractérisé en ce que la relation prédéterminée est une égalité entre les valeurs.

8. Dispositif selon l'une quelconque des revendications 4 à 7, caractérisé en ce que lesdits capteurs axiaux utilisent deux disques (56a, 56b) comme cibles.

9. Dispositif selon l'une quelconque des revendications 1, 2 ou 4 à 7, caractérisé en ce que le point prédéterminé est un centre dans le sens axial du rotor, et lesdits capteurs axiaux utilisent comme cibles les deux faces d'extrémité latérales du rotor.
